# NEUE EUROPÄISCHE PATENTSCHRIFT

(11) **EP 2 780 526 B2**
(45) Veröffentlichungstag und Bekanntmachung des Hinweises auf die Entscheidung über den Einspruch: **24.07.2024**
(45) Hinweis auf die Patenterteilung: 01.09.2021
(21) Anmeldenummer: 12790404.3
(22) Anmeldetag: 06.11.2012
(51) Int. Cl.: E05F 3/22, E05F 15/63

(54) **SERVOTÜRSCHLLIESSER**
SERVO DOOR CLOSER
FERME-PORTE ASSERVI

(30) Priorität: 18.11.2011 DE 102011055491
(43) Veröffentlichungstag der Anmeldung: 24.09.2014
(73) Patentinhaber: dormakaba Deutschland GmbH, 58256 Ennepetal (DE)
(72) Erfinder: SALUTZKI, Thomas, 58456 Witten (DE); SEMELKA, Wolfgang, 58456 Witten (DE); BÖSE, Felix, 58256 Ennepetal (DE)
(74) Vertreter: Balder IP Law, S.L.
(86) Internationale Anmeldenummer: PCT/EP2012/004609
(87) Internationale Veröffentlichungsnummer: WO 2013/072024

(56) Entgegenhaltungen:
- WO-A1-2005/019577
- DE-A1- 10 101 704
- DE-A1- 19 500 944
- DE-A1- 19 726 021
- DE-A1- 3 638 353
- DE-A1- 3 823 487
- DE-A1- 4 323 152
- US-A1- 2006 244 271

## Beschreibung

Vorliegende Erfindung betrifft einen Servotürschließer zum Unterstützen eines Öffnungs- oder Schließvorgangs einer Tür.

Der Stand der Technik kennt Türschließer, umfassend eine durch eine Antriebsmechanik antreibbare Abtriebswelle. Die Abtriebswelle ist beispielsweise über ein Scherengestänge oder eine Gleitschienenanordnung mit einem Türflügel verbunden. Des Weiteren wirkt auf die Antriebsmechanik eine Schließerfeder. Durch manuelles Öffnen des Türflügels wird die Abtriebswelle in Rotation versetzt. Über die Antriebsmechanik wird die Schließerfeder gespannt und speichert somit die Energie für den Schließvorgang. Der Schließvorgang des Türflügels erfolgt ohne manuelle Betätigung durch den Benutzer. Hierbei wirkt die Energie der Schließerfeder über die Antriebsmechanik auf die Abtriebswelle und infolgedessen auf den Türflügel. Insbesondere bei sehr schweren und großen Türflügeln bedarf es einer Unterstützung zur Spannung der Schließerfeder beim Öffnungsvorgang und/oder einer Dämpfung der Tür in der Endlage. Damit der Türflügel sicher in die Schlossfalle einrastet, ist ein ausreichendes Schließmoment im Bereich der Nulllage der Tür erforderlich. Ein Servotürschließer gemäß dem Oberbegriff des Anspruchs 1 ist aus der US 2006/244271 A1 bekannt.

Aufgabe vorliegender Erfindung ist es, einen Servotürschließer anzugeben, der bei kostengünstiger Herstellung, Montage und Wartung ein sicheres und benutzerfreundliches Unterstützen des Öffnungs- und/oder Schließvorgangs der Tür ermöglicht.

Die Aufgabe wird gelöst durch die Merkmale des Anspruchs 1. Die Unteransprüche haben vorteilhafte Ausgestaltungen der Erfindung zum Gegenstand.

Somit wird die Erfindung gelöst durch einen Servotürschließer, umfassend eine Abtriebswelle. Die Abtriebswelle ist zur Kraftübertragung auf ein Gestänge oder zur direkten Kraftübertragung auf einen Türflügel ausgebildet. Als Gestänge dient beispielsweise ein Scherengestänge oder ein Gleitschienengestänge. Ist der Servotürschließer direkt am Türflügel befestigt, so wird die Kraft über die Abtriebswelle und das Gestänge auf einen festen Punkt, beispielsweise eine Wand oder eine Zarge, übertragen. Ist der Servotürschließer an der Wand oder Zarge befestigt, so wird über die Abtriebswelle und das Gestänge die Kraft auf den Türflügel übertragen. Alternativ kann der Servotürschließer, beispielsweise als Bodentürschließer, direkt die Kraft von der Abtriebswelle auf die Schwenkachse des Türflügels übertragen. Des Weiteren umfasst der erfindungsgemäße Servotürschließer eine mit der Abtriebswelle wirkverbundene Antriebsmechanik und einen auf die Antriebsmechanik wirkenden mechanischen Energiespeicher zur Speicherung einer Schließenergie für den Türflügel. Dieser mechanische Energiespeicher wird beim manuellen Öffnungsvorgang des Türflügels aufgeladen bzw. gespannt und entlädt sich zum Schließen des Türflügels. Des Weiteren umfasst der Servotürschließer eine mit der Abtriebswelle wirkverbundene Motor-/Generatoreinheit und einen mit der Motor-/Generatoreinheit elektrisch verbundenen elektrischen Energiespeicher zur Speicherung einer Unterstützungsenergie für den Türflügel. Gleichzeitig mit dem Öffnungs- und dem Schließvorgang des Türflügels rotiert stets die Abtriebswelle und infolgedessen auch die mit der Abtriebswelle wirkverbundene Ankerwelle der Motor-/Generatoreinheit. Die Motor-/ Generatoreinheit dient nun, je nachdem wie sie angesteuert wird, zum Aufladen des elektrischen Energiespeichers oder zum unterstützenden Antreiben der Abtriebswelle. Insbesondere ist die Motor-/Generatoreinheit mit der Abtriebswelle bidirektional mechanisch wirkverbunden bzw. gekoppelt. Dies bedeutet, dass bei Rotation der Abtriebswelle, also beim Öffnungs- und Schließvorgang der Tür, stets auch die Ankerwelle der Motor-/Generatoreinheit rotiert.

Erfindungsgemäß ist vorgesehen, dass die Motor-/ Generatoreinheit zur Reduzierung des Öffnungsmomentes zu Beginn des Öffnungsvorgangs des Türflügels verwendet wird. Je nach Ausgestaltung der Antriebsmechanik und des verwendeten Gestänges kann das benötigte Öffnungsmoment bei niedrigen Türwinkeln sehr hoch sein. Besonders in diesem Bereich bietet sich eine Unterstützung des Öffnungsvorganges mittels der Motor-/ Generatoreinheit an. Hierzu ist erfindungsgemäß vorgesehen, dass die Motor-/ Generatoreinheit dazu ausgebildet ist, ein manuelles Öffnen des Türflügels nur im Winkelbereich von 0 bis 45° insbesondere nur von 0 bis 30° insbesondere nur von 0 bis 25° zu unterstützen. Es ist bewusst vorgesehen, dass nur ein Teilbereich des Öffnungsvorgangs unterstützt wird, so dass die Motor-/Generatoreinheit und der elektrische Energiespeicher nicht zu groß dimensioniert werden müssen und stets ausreichend elektrische Energie zur Verfügung steht.

Beim Schließvorgang ist es wünschenswert, die mechanische Schließung bei niedrigen Winkelbereichen zu unterstützen, so dass die Tür sicher in der Falle einrastet. Hierzu ist erfindungsgemäß vorgesehen, dass die Motor-/Generatoreinheit dazu ausgebildet ist, ein Schließen des Türflügels nur im Winkelbereich von 0 bis 45° insbesondere nur von 0 bis 30° insbesondere nur von 0 bis 25° zu unterstützen.

Besonders bevorzugt ist vorgesehen, dass der mechanische Energiespeicher eine Schließerfeder umfasst. Diese Schließerfeder ist insbesondere eine Spiralfeder. Die Antriebsmechanik umfasst bevorzugt eine Zahnstange, die mit einem Zahnrad an der Abtriebswelle in Eingriff steht. Alternativ dazu kann auf der Abtriebswelle eine Nockenscheibe angeordnet sein. Die Antriebsmechanik umfasst sodann eine Druckrolle, die auf dieser Nockenscheibe abrollt. Entweder auf die Zahnstange oder auf diese Druckrolle wirkt die Schließerfeder, so dass durch Rotation der Abtriebswelle entweder über die Zahnstange oder über die Druckrolle eine Linearbewegung auf die Schließerfeder erzeugt wird.

Des Weiteren ist bevorzugt vorgesehen, dass der elektrische Energiespeicher zumindest einen Akkumulator und/oder zumindest einen Kondensator umfasst. Der Servotürschließer hat insbesondere keinen Anschluss zu einem Stromnetz. Für die Unterstützung des Öffnungs- und/oder Schließvorgangs der Tür wird ausschließlich die Energie aus dem elektrischen Energiespeicher verwendet.

Es ist vorgesehen, dass die Motor-/ Generatoreinheit dazu ausgebildet ist, ein manuelles Öffnen des Türflügels und ein gleichzeitiges Spannen des mechanischen Energiespeichers zu unterstützen. Des Weiteren ist vorgesehen, dass ein durch Entladen des mechanischen Energiespeichers ausgeführtes Schließen des Türflügels durch die Motor-/ Generatoreinheit unterstützt wird. Beim Öffnungsvorgang erfolgt ein Spannen des mechanischen Energiespeichers. Hierzu ist ein gewisser Kraftaufwand durch den Benutzer der Tür notwendig. Um diesen Kraftaufwand zu reduzieren, wird der Öffnungsvorgang durch die Motor-/Generatoreinheit und durch die im elektrischen Energiespeicher gespeicherte Energie unterstützt. Das Schließen der Tür erfolgt unter Entladung des mechanischen Energiespeichers. Hier kann die Motor-/Generatoreinheit und die im elektrischen Energiespeicher gespeicherte Energie sowohl zur Verstärkung des mechanischen Energiespeichers unter Abgabe elektrischer Energie als auch zur Dämpfung der Türschließung unter Aufnahme elektrischer Energie genutzt werden.

Bevorzugt ist die Motor-/Generatoreinheit dazu ausgebildet, beim Öffnen und/ oder Schließen des Türflügels als Generator zur Aufladung des elektrischen Energiespeichers zu wirken.

Insbesondere teilweise beim Schließvorgang kann ein Teil der mechanischen Energie aus dem mechanischen Energiespeicher über die Motor-/Generatoreinheit in elektrische Energie umgewandelt werden. Dabei wirkt die Motor-/Generatoreinheit gleichzeitig als Generator zur Aufladung des elektrischen Energiespeichers und zur Dämpfung des Schließvorgangs der Türe.

Beim manuellen Öffnen des Türflügels müssen insbesondere schwere Türflügel im Endbereich gedämpft werden, so dass beispielsweise ein Anschlagen des Türflügels an der Wand oder eine Überbelastung der Scharniere vermieden wird. Hierzu ist bevorzugt vorgesehen, dass die Motor-/Generatoreinheit dazu ausgebildet ist, ein manuelles Öffnen des Türflügels im Türwinkelbereich von bis zu 30°vor der Türendlage, insbesondere von bis zu 20° vor der Türendlage, insbesondere von bis zu 15° vor der Türendlage, als Generator wirkend zu dämpfen.

Die Unterstützung des Öffnungs- oder Schließvorgangs mittels der Motor-/Generatoreinheit erfolgt stets unter Abgabe elektrischer Energie aus dem elektrischen Energiespeicher.

Des Weiteren ist eine die Motor-/Generatoreinheit ansteuernde Steuereinheit vorgesehen. Die Steuereinheit kann sowohl steuernd als auch regelnd auf den Motor-/Generator wirken. An der Motor-/Generatoreinheit ist bevorzugt ein Positionssensor angebracht, der den Drehwinkel direkt an der Motor-/Generator-einheit, insbesondere direkt an der Ankerwelle, erfasst. Alternativ kann der Positionssensor auch an der Abtriebswelle angeordnet sein. Darüber hinaus ist die Steuereinheit dazu ausgebildet, basierend auf dem Strom und/oder der Spannung an der Motor-/ Generatoreinheit, die Drehrichtung des Türflügels zu erkennen. Basierend auf den Drehwinkeldaten des Positionssensors und der Drehrichtung erfolgt die bedarfsgerechte Ansteuerung der Motor-/ Generatoreinheit und somit die Unterstützung oder Dämpfung der Türflügelbewegung.

Die Erfindung wird nun anhand eines Ausführungsbeispiels näher beschrieben. Dabei zeigen:
- Figur 1: den schematischen Aufbau eines erfindungsgemäßen Servotürschließers gemäß einem Ausführungsbeispiel,
- Figur 2: einen Verlauf des Öffnungsmomentes bei Verwendung des erfindungsgemäßen Servotürschließers gemäß dem Ausführungsbeispiel,
- Figur 3: einen Verlauf des Schließmomentes bei Verwendung des erfindungsgemäßen Servotürschließers gemäß dem Ausführungsbeispiel, und
- Figur 4: einen schematischen Aufbau einer Steuereinheit des erfindungsgemäßen Servotürschließers gemäß dem Ausführungsbeispiel.

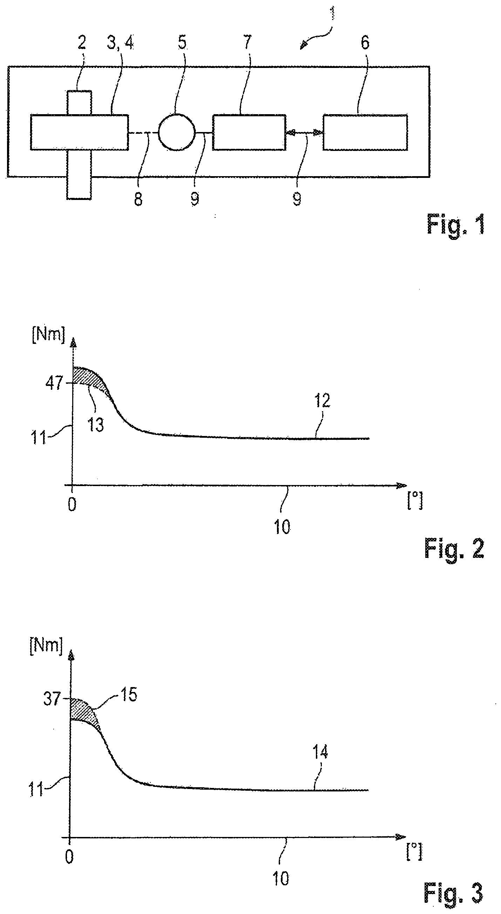

Die Figur 1 zeigt den schematischen Aufbau des Servotürschließers 1. Der Servotürschließer 1 umfasst eine Abtriebswelle 2, eine Antriebsmechanik 3, einen mechanischen Energiespeicher 4, ausgebildet als Schließerfeder, eine Motor-/Generatoreinheit 5, eine Steuereinheit 7 und einen elektrischen Energiespeicher 6, ausgebildet als Akkumulator oder Kondensator.

Über die Antriebsmechanik 3 wird die Abtriebswelle 2 in Rotation versetzt. An diese Abtriebswelle 2 wird beispielsweise direkt die Tür oder ein Scherengestänge oder ein Gleitschienengestänge montiert. Die Antriebsmechanik 3 übersetzt die Drehbewegung der Abtriebswelle 2 in eine Linearbewegung. Diese Linearbewegung wird zur Kraftübertragung auf die Schließerfeder 4 verwendet. Beim Schließvorgang der Tür wird die Schließerfeder 4 entspannt. Dabei überträgt die Abtriebsmechanik 3 die Linearbewegung der Schließerfeder 4 in eine rotierende Bewegung der Abtriebswelle 2.

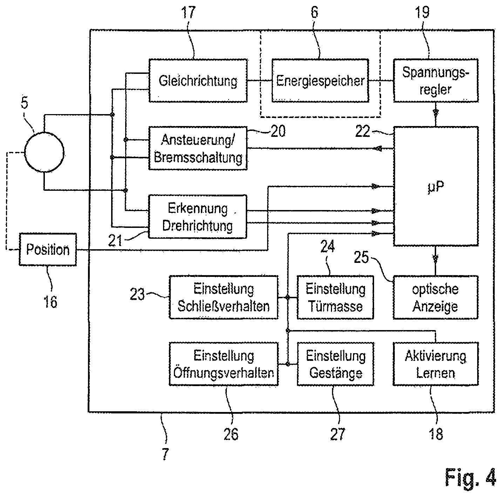

Die Motor-/Generatoreinheit 5 ist über die mechanische Wirkverbindung 8 mit der Abtriebswelle 2 verbunden. Diese mechanische Wirkverbindung 8 bzw. Kopplung ist bidirektional, so dass bei Rotation der Abtriebswelle 2 stets die Ankerwelle der Motor-/ Generatoreinheit 5 rotiert und umgekehrt. Die Motor-/Generatoreinheit 5 ist über eine Steuereinheit 7 (s. Figur 4) mit dem elektrischen Energiespeicher 6 elektrisch verbunden. Dadurch kann mittels der Motor-/Generatoreinheit 5 der elektrische Energiespeicher 6 aufgeladen werden bzw. die Motor-/Generatoreinheit 5 mittels des elektrischen Energiespeichers 6 als Motor betrieben werden. Hierzu sind elektrische Verbindungen 9 zwischen Motor-/ Generatoreinheit 5, Steuereinheit 7 und elektrischem Energiespeicher 6 vorgesehen.

Figur 2 zeigt den Verlauf eines Öffnungsmomentes an der Abtriebswelle 2 während des Öffnungsvorgangs eines Türflügels. An der X-Achse 10 ist der Türflügelöffnungswinkel dargestellt. An der Y-Achse 11 ist das Öffnungsmoment dargestellt. Die durchgezogene Linie zeigt ein Öffnungsmoment 12 ohne Unterstützung durch die Motor-/Generatoreinheit 5. Die gestrichelte Linie zeigt eine Öffnungsunterstützung 13 durch die Motor-/Generatoreinheit 5 im Bereich niedriger Türwinkel, d.h. im Bereich der anfänglichen Öffnung der Türe. Erfindungsgemäß kann eine relativ schwache Antriebsmechanik 3 verwendet werden, wobei durch die zusätzliche Anwendung der Motor-/Generatoreinheit 5 und des elektrischen Energiespeichers 6 das Öffnungsmoment auf bevorzugt 47 Nm reduziert werden kann. Dieses Öffnungsmoment von 47 Nm gibt die DIN-Norm 18040 für einen barrierefreien Zugang bestimmter Türen vor.

Figur 3 zeigt den Verlauf eines Schließmomentes an der Abtriebswelle 2. Hier ist wiederum an der X-Achse 10 der Türwinkel dargestellt. Die Y-Achse 11 zeigt das Schließmoment. Die durchgezogene Linie zeigt ein Schließmoment 14 ohne die Unterstützung durch die Motor-/Generatoreinheit 5. Die gestrichelte Linie zeigt eine Schließunterstützung 15 mittels der Motor-/Generator-einheit. Hier wird erfindungsgemäß eine relativ schwache Schließermechanik durch die Motor-/Generatoreinheit 5 und den elektrischen Energiespeicher 6 derart unterstützt, dass das Schließmoment auf 37 Nm angehoben werden kann. Diese 37 Nm Schließmoment sind aus Brandschutzgründen für bestimmte Türen notwendig und vorgegeben durch die DIN-Norm 1154.

Zusätzlich zur Reduzierung des Öffnungsmomentes gemäß Figur 2 oder zur Erhöhung des Schließmomentes gemäß Figur 3 ist es auch möglich, mit der Motor-/Generatoreinheit 5 beispielsweise das Öffnungsmoment im Bereich großer Türwinkel zu erhöhen, so dass eine Öffnungsendlagendämpfung realisiert wird. Ebenso kann während des Schließvorgangs die Motor-/ Generatoreinheit 5 als Generator betrieben werden und somit eine Schließdämpfung bereitstellen.

Figur 4 zeigt eine schematische Darstellung der Steuereinheit 7 des Servotürschließers 1 gemäß dem Ausführungsbeispiel. Die Steuereinheit 7 ist an die Motor-/Generatoreinheit 5 angeschlossen. An der Motor-/Generatoreinheit 5 befindet sich ein Positionssensor 16, der ebenfalls an die Steuereinheit 7 angeschlossen ist. Die Steuereinheit 7 ist ferner verbunden mit dem Energiespeicher 6.

Die Steuereinheit 7 umfasst einen Gleichrichter 17, verbunden mit der Motor/Generatoreinheit 5. Dieser Gleichrichter 17 wiederum ist verbunden mit dem Energiespeicher 6. Des Weiteren umfasst die Steuereinheit 7 einen Spannungsregler 19 zur Versorgung der Steuereinheit 7, insbesondere eines Prozessors 22, mit Energie aus dem Energiespeicher 6. Der Prozessor 22 der Steuereinheit 7 empfängt vom Positionssensor 16 Daten über den aktuellen Drehwinkel des Türflügels. Eine Drehrichtungserkennungseinheit 21 ermittelt aufgrund von Strom oder Spannung an der Motor-/ Generatoreinheit 5 die Drehrichtung der Motor-/Generatoreinheit 5 und liefert diese Daten ebenfalls an den Prozessor 22. Weitere Eingangsdaten für den Prozessor 22 sind das gewünschte Schließverhalten 23, das gewünschte Öffnungsverhalten 26, die Türmasse 24 sowie Daten zum verwendeten Gestänge 27 und ein Algorithmus zum aktiven Lernen 18. Der Prozessor 22 steuert über eine Ansteuer/Bremsschaltungseinheit 20 die Motor-/ Generatoreinheit 5. Des Weiteren ist an der Steuereinheit 7 eine optische Anzeige 25 zur Anzeige verschiedener Betriebszustände des Servotürschließers 1 vorgesehen.

Mittels dieser Steuereinheit 7 ist es möglich, in Abhängigkeit der Drehrichtung des Türflügels und in Abhängigkeit des Türwinkels die Motor-/Generatoreinheit 5 derart anzusteuern, dass sie entweder als Generator oder als Motor wirkt.

### Bezugszeichenliste

- 1: Servotürschließer
- 2: Abtriebswelle
- 3: Antriebsmechanik
- 4: Mechanischer Energiespeicher
- 5: Motor-/Generatoreinheit
- 6: Elektrischer Energiespeicher
- 7: Steuereinheit
- 8: Mechanische Wirkverbindung
- 9: Elektrische Verbindung
- 10: X-Achse
- 11: Y-Achse
- 12: Öffnungsmoment
- 13: Öffnungsunterstützung
- 14: Schließmoment
- 15: Schließunterstützung
- 16: Positionssensor
- 17: Gleichrichter
- 18: aktive Lerneinheit
- 19: Spannungsregler
- 20: Ansteuer/Bremsschaltungseinheit
- 21: Drehrichtungserkennungseinheit
- 22: Prozessor
- 23: Schließverhalten
- 24: Türmasse
- 25: Optische Anzeige
- 26: Öffnungsverhalten
- 27: Daten zum verwendeten Gestänge

## Patentansprüche

1. Servotürschließer (1), umfassend
- eine Abtriebswelle (2),
- eine mit der Abtriebswelle (2) wirkverbundene Antriebsmechanik (3),
- einen auf die Antriebsmechanik (3) wirkenden mechanischen Energiespeicher zur Speicherung einer Schließenergie für den Türflügel,
- eine mit der Abtriebswelle (2) wirkverbundene Motor-/Generatoreinheit (5), und
- einen mit der Motor-/Generatoreinheit (5) elektrisch verbundenen elektrischen Energiespeicher (6) zur Speicherung einer Unterstützungsenergie für den Türflügel,
**dadurch gekennzeichnet, dass**
die Motor-/Generatoreinheit (5) dazu ausgebildet ist, ein manuelles Öffnen des Türflügels nur im Türwinkelbereich von 0° bis 45°, insbesondere nur von 0° bis 30°, insbesondere nur von 0° bis 25°, zu unterstützen,
und die Motor-/Generatoreinheit (5) dazu ausgebildet ist, ein Schließen des Türflügels nur im Türwinkelbereich von 0° bis 45°, insbesondere nur von 0° bis 30°, insbesondere nur von 0° bis 25°, zu unterstützen.

2. Servotürschließer nach Anspruch 1, **dadurch gekennzeichnet, dass** der mechanische Energiespeicher (4) eine Schließerfeder umfasst.

3. Servotürschließer nach einem der vorhergehenden Ansprüche, **dadurch gekennzeichnet, dass** der elektrische Energiespeicher (6) einen Akkumulator und/oder einen Kondensator umfasst.

4. Servotürschließer nach einem der vorhergehenden Ansprüche, **dadurch gekennzeichnet, dass** die Motor-/Generatoreinheit (5) dazu ausgebildet ist, ein manuelles Öffnen des Türflügels und ein gleichzeitiges Spannen des mechanischen Energiespeichers (4) zu unterstützen, und ein durch Entladen des mechanischen Energiespeichers (4) ausgeführtes Schließen des Türflügels zu unterstützen.

5. Servotürschließer nach einem der vorhergehenden Ansprüche, **dadurch gekennzeichnet, dass** die Motor-/Generatoreinheit (5) dazu ausgebildet ist, beim Öffnen und/oder Schließen des Türflügels als Generator zur Aufladung des elektrischen Energiespeichers (6) zu wirken.

6. Servotürschließer nach einem der vorhergehenden Ansprüche, **dadurch gekennzeichnet, dass** die Motor-/Generatoreinheit (5) dazu ausgebildet ist, ein manuelles Öffnen des Türflügels im Türwinkelbereich von bis zu 30° vor der Türendlage, insbesondere von bis zu 20° vor der Türendlage, insbesondere von bis zu 15° vor der Türendlage, als Generator wirkend zu dämpfen.

7. Servotürschließer nach einem der vorhergehenden Ansprüche, **gekennzeichnet durch** einen Positionssensor (16) zur Erfassung des Drehwinkels direkt an der Motor-/ Generatoreinheit (5).

8. Servotürschließer nach einem der vorhergehenden Ansprüche, **gekennzeichnet durch** eine die Motor-/Generatoreinheit (5) ansteuernde Steuereinheit (7), die dazu ausgebildet ist, basierend auf dem Strom und/oder der Spannung an der Motor-/ Generatoreinheit (5) die Drehrichtung des Türflügels zu erkennen.

## Claims

1. Servo door closer (1), comprising
- an output shaft (2),
- a drive mechanism (3) operatively connected to the output shaft (2),
- a mechanical energy accumulator acting on the drive mechanism (3) for storing closing energy for the door leaf,
- a motor/generator unit (5) operatively connected to the output shaft (2), and
- an electrical energy accumulator (6) electrically connected to the motor/generator unit (5) for storing assisting energy for the door leaf,
**characterised in that**
the motor/generator unit (5) is formed to assist a manual opening of the door leaf only in the door angle range of 0° to 45°, in particular only from 0° to 30°, in particular only from 0° to 25°,
and the motor/generator unit (5) is formed to assist a closure of the door leaf only in the door angle range of 0° to 45°, in particular only from 0° to 30°, in particular only from 0° to 25°.

2. Servo door closer according to claim 1, **characterised in that** the mechanical energy accumulator (4) comprises a closer spring.

3. Servo door closer according to one of the preceding claims, **characterised in that** the electrical energy accumulator (6) comprises an accumulator and/or a capacitor.

4. Servo door closer according to one of the preceding claims, **characterised in that** the motor/generator unit (5) is formed to assist a manual opening of the door leaf and a simultaneous tensioning of the mechanical energy accumulator (4), and to assist a closure of the door leaf carried out during discharge of the mechanical energy accumulator (4).

5. Servo door closer according to one of the preceding claims, **characterised in that** the motor/generator unit (5) is formed to act as a generator to charge the electrical energy accumulator (6) when opening and/or closing the door leaf.

6. Servo door closer according to one of the preceding claims, **characterised in that** the motor/generator unit (5) is formed, acting as a generator, to dampen a manual opening of the door leaf in the door angle range of up to 30° before the door end position, in particular of up to 20° before the door end position, in particular of up to 15° before the door end position.

7. Servo door closer according to one of the preceding claims, **characterised by** a position sensor (16) for detecting the angle of rotation directly at the motor/generator unit (5).

8. Servo door closer according to one of the preceding claims, **characterised by** a control unit (7) actuating the motor/generator unit (5) which is formed to detect the direction of rotation of the door leaf based on the current and/or the voltage at the motor/generator unit (5).

## Revendications

1. Fermeture de porte à servocommande (1), comprenant
- un arbre de sortie (2),
- un mécanisme d'entraînement (3) connecté de manière fonctionnelle à l'arbre de sortie (2),
- un accumulateur d'énergie mécanique agissant sur le mécanisme d'entraînement (3) pour stocker l'énergie de fermeture pour le battant de porte,
- une unité moteur/générateur (5) connectée de manière fonctionnelle à l'arbre de sortie (2), et
- un accumulateur d'énergie électrique (6) connecté électriquement à l'unité moteur/générateur (5) pour stocker de l'énergie d'assistance pour le battant de porte,
**caractérisée en ce que**
l'unité moteur/générateur (5) est formée pour assister une ouverture manuelle du battant de porte uniquement dans la plage d'angle de porte de 0 ° à 45 °, en particulier seulement de 0 ° à 30 °, en particulier seulement de 0 ° à 25 °,
et l'unité moteur/générateur (5) est formée pour assister une fermeture du battant de porte uniquement dans la plage d'angle de porte de 0 ° à 45 °, en particulier seulement de 0 ° à 30 °, en particulier seulement de 0 ° à 25°.

2. Fermeture de porte à servocommande selon la revendication 1, **caractérisée en ce que** l'accumulateur d'énergie mécanique (4) comprend un ressort de fermeture.

3. Fermeture de porte à servocommande selon l'une des revendications précédentes, **caractérisée en ce que** l'accumulateur d'énergie électrique (6) comprend un accumulateur et/ou un condensateur.

4. Fermeture de porte à servocommande selon l'une des revendications précédentes, **caractérisée en ce que** l'unité moteur/générateur (5) est formée pour assister une ouverture manuelle du battant de porte et une mise sous tension simultanée de l'accumulateur d'énergie mécanique (4) et pour assister une fermeture du battant de porte effectuée pendant la décharge de l'accumulateur d'énergie mécanique (4).

5. Fermeture de porte à servocommande selon l'une des revendications précédentes, **caractérisée en ce que** l'unité moteur/générateur (5) est formée pour agir comme un générateur pour charger l'accumulateur d'énergie électrique (6) lors de l'ouverture et/ou de la fermeture du battant de porte.

6. Fermeture de porte à servocommande selon l'une des revendications précédentes, **caractérisée en ce que** l'unité moteur/générateur (5) est formée, agissant comme un générateur, pour amortir une ouverture manuelle du battant de porte dans la plage d'angle de porte jusqu'à 30 ° avant la position finale de porte, en particulier jusqu'à 20 ° avant la position finale de porte, en particulier jusqu'à 15 ° avant la position finale de porte.

7. Fermeture de porte à servocommande selon l'une des revendications précédentes, **caractérisée par** un capteur de position (16) pour détecter l'angle de rotation directement au niveau de l'unité moteur/générateur (5).

8. Fermeture de porte à servocommande selon l'une des revendications précédentes, **caractérisée par** une unité de contrôle (7) actionnant l'unité moteur/générateur (5) qui est formée pour détecter le sens de rotation du battant de porte sur la base du courant et/ou de la tension au niveau de l'unité moteur/générateur (5).
